# EUROPÄISCHE PATENTSCHRIFT

(11) **EP 2 303 602 B1**
(45) Veröffentlichungstag und Bekanntmachung des Hinweises auf die Patenterteilung: **09.11.2011**
(21) Anmeldenummer: 09777129.9
(22) Anmeldetag: 11.07.2009
(51) Int. Cl.: B43K 19/18, B43K 19/02, C09D 13/00

(54) **MINE FÜR SCHREIB-, ZEICHEN- UND/ODER MALGERÄTE**
PENCIL LEAD FOR WRITING, DRAWING AND/OR PAINTING DEVICES
MINE POUR APPAREILS D'ÉCRITURE, DE DESSIN ET/OU DE PEINTURE

(30) Priorität: 15.07.2008 DE 102008034014
(43) Veröffentlichungstag der Anmeldung: 06.04.2011
(73) Patentinhaber: J.S. Staedtler GmbH & Co. KG, 90427 Nürnberg (DE)
(72) Erfinder: THIES, Andreas, 91090 Effeltrich (DE)
(86) Internationale Anmeldenummer: PCT/EP2009/005050
(87) Internationale Veröffentlichungsnummer: WO 2010/006742

(56) Entgegenhaltungen:
- EP-A- 1 302 516
- EP-A- 1 624 036
- DE-C1- 3 827 968
- GB-A- 461 109
- US-A- 3 409 574
- US-A- 4 617 058

## Beschreibung

Die Erfindung betrifft polymergebundene Minen für Schreib-, Zeichen- und/oder Malgeräte.

Derartige Minen zum Schreiben, Zeichnen und/oder Malen sind prinzipiell bekannt. Unter polymergebundenen Minen auf Graphitbasis zum Schreiben, Zeichnen und/oder Malen versteht man einerseits Minen, die fest in Holz oder andere spitzbare Materialien eingebracht werden und andererseits Minen, die verschiebbar in einer biegesteifen Hülle gehaltert sind. Beispiele hierfür sind holzgefasste Bleistifte und Minen für mechanische Stifte, beispielsweise so genannte Druckbleistifte oder Fallstifte. Dabei weisen die Minen üblicherweise Außendurchmesser im Bereich von etwa 0,3 mm bis 6 mm auf.

So sind beispielsweise polymergebundene Graphitminen aus der DE 38 27 968 C1 bekannt. Derartige ungebrannte Minen beinhalten ein polymeres Bindemittel, Gleitmittel und Füllstoffe.

Nachteilig bei der Herstellung derartiger Minen ist es, dass bei einem hohen Füllstoffgehalt von größer als 50 Gew.-% zwar deren Schreib- und Maleigenschaften sehr gut sind, die Viskosität der Minenmasse während der Extrusion aber sehr hoch ist und der dadurch notwendige Extrusionsdruck im Werkzeug und im Extruder sehr hohe Werte annimmt. Der Kopfdruck beträgt etwa 350 bar. Dies wirkt sich insofern nachteilig aus, da eine größere Dimensionierung des Extruders und eine aufwendige Ausstattung erforderlich ist. Aber auch die Lebensdauer der Maschinen und Werkzeuge wird durch den hohen Extrusionsdruck stark reduziert.

**Aufgabe** der Erfindung ist es daher, eine Mine zum Schreiben, Zeichnen und/oder Malen zu schaffen, die die genannten Nachteile nicht aufweist und die mit geringem Extrusionsdruck hergestellt werden kann.

**Die Aufgabe** wird für die polymergebundene Mine für Schreib-, Zeichen- oder Malgeräte, insbesondere für Bleistifte oder Farbstifte, umfassend mindestens ein polymeres Bindemittel, mindestens ein Wachs und mindestens einen Füllstoff, gelöst, indem die Mine weiterhin 0,1 bis 5 Gew.-% Palmöl aufweist.

Es hat sich in überraschender Weise herausgestellt, dass durch den gezielten Einsatz von Palmöl als Minenbestandteil, ein inneres Gleitmittel zur Rezeptur zugegeben ist, wodurch der Extrusionsdruck im Extruder signifikant herabgesetzt wird. Der Palmöl-Zusatz in der Minenzusammensetzung führt beim Extrudieren insbesondere zu einer deutlichen Reduzierung des Press- bzw. Extrusionsdrucks am Mundstück oder Kopf des Extruders. Dabei sinkt der Druck mit steigender Zugabemenge an Palmöl, wobei eine Reduzierung des Drucks um mindestens 30%, insbesondere um mindestens 50%, gegenüber herkömmlichen extrudierbaren Minenzusammensetzungen erreicht wird.

Es hat sich gezeigt, dass andere natürliche oder synthetische Öle den Druck im Extruder zwar ebenfalls senken, dass diese aber die Festigkeit der extrudierten Mine überproportional beeinträchtigen. Überraschender Weise ist dies bei einem Einsatz von Palmöl nicht der Fall, da der Druck im Extruder niedrig und dennoch die Minenfestigkeit im erforderlichen Maß vorhanden ist.

Die typische Fettsäureverteilung von Palmöl setzt sich wie folgt zusammen:

| | |
|---|---|
| C12: Laurinsäure | 0 - 1 % |
| C14: Myristinsäure | 0 - 3 % |
| C16: Palmitinsäure | 36 - 47 % |
| C18: Stearinsäure | 2 - 8 % |
| C18: Ölsäure | 36 - 42 % |
| C18: Linolsäure | 7 - 12% |
| C18: Linolensäure | 0 - 1 % |
| Sonstige: | max. 1 % |

Zudem bewirkt das Palmöl einen intensiveren Farbeindruck des Abstrichs der Mine und verbessert deren Gleitverhalten beim Schreiben. Bei Bleistiftminen zeigt sich ein satter Abstrich mit hohem Schwärzungsgrad, während Farbstiftminen einen satten, leuchtend intensiven Farbton des Abstrichs zeigen.

Der Palmöl-Anteil an der Minenzusammensetzung liegt im Bereich von 0,1 bis 5 Gew.-%, insbesondere im Bereich von 0,5 bis 2,5 Gew.-%. Geht der Gehalt an Palmöl über die vorstehende Grenze von 5 Gew.-% hinaus, so wird die Minenfestigkeit auch bei der Verwendung von Palmöl überproportional herabgesetzt. Die Minen neigen dann im Gebrauch zum Bröseln oder zum Brechen.

Die verwendeten Wachse sind bei 20 °C knetbar, fest bis brüchig hart, weisen eine grobe bis feinkristalline Struktur auf, sind farblich durchscheinend bis opak, aber nicht glasartig und schmelzen über 40 °C ohne Zersetzung. Sie sind wenig oberhalb des Schmelzpunktes leicht flüssig und besitzen eine stark temperaturabhängige Konsistenz und Löslichkeit.

Bei den erfindungsgemäßen polymergebundenen Minen handelt es sich um ungebrannte Minen, die sofort nach dem Extrudieren ohne eine weitere Wärmebehandlung oder Imprägnierung einsetzbar sind.

Angeführt seien neben Bleistift- und Farbstiftminen auch Sonderminen, wie beispielsweise Minen für so genannte Zimmermannsstifte.

Vorteilhafte Ausgestaltungen ergeben sich aus den Unteransprüchen.

Es hat sich als vorteilhaft erwiesen, wenn die polymergebundene Mine

| | |
|---|---|
| 10 bis 30 Gew.-% | polymeres Bindemittel |
| 2 bis 25 Gew.-% | Wachs |
| 0,1 bis 5 Gew.-% | Palmöl und |
| Rest | Füllstoff(e) |

aufweist.

Insbesondere ist es bevorzugt, wenn die polymergebundene Mine

| | |
|---|---|
| 15 bis 25 Gew.-% | Bindemittel |
| 4 bis 20 Gew.-% | Wachs |
| 0,5 bis 2,5 Gew.-% | Palmöl und |
| Rest | Füllstoff(e) |

aufweist.

Es hat sich bewährt, wenn das mindestens eine Bindemittel aus mindestens einem Polymer der Gruppe umfassend Polystyrol (PS), Styrol-Acylnitril (SAN), Styrolbutadien (SB), Polyolefine (PO) und Acrylnitril-Butadien-Styrol (ABS) gebildet ist.
Auch Mischungen aus zwei oder mehreren Bindemitteln sind einsetzbar.

Weiterhin hat es sich bewährt, wenn das mindestens eine Wachs mindestens eines aus der Gruppe umfassend Stearate, Montanwachse, Amidwachse, Paraffine ist.
Auch Mischungen aus zwei oder mehreren Wachsen sind einsetzbar. Besonders bevorzugt ist es dabei, wenn das mindestens eine Wachs aus Kalziumstearat gebildet ist oder Kalziumstearat umfasst.

Vorteilhafter Weise ist der mindestens eine Füllstoff aus mindestens einem Füllstoff der Gruppe umfassend Graphit, Ruß, hexagonales Bornitrid, Schichtsilikate, Kreide, Schwerspat, bunte Pigmente, unbunte Pigmente gebildet.

Für Bleistiftminen ist dabei insbesondere Graphit oder Graphit in Kombination mit Ruß als farbgebende Füllstoffe bevorzugt. Für Farbstiftminen haben sich Kombinationen aus weißen oder farblosen Füllstoffen, wie hexagonalem Bornitrid, Schichtsilikaten, usw., mit farbgebenden Pigmenten, wie Azo-Pigmente, Phthalocyanine, Dioxazine, Chinacridone, Eisenoxide, Russ, Graphite, Ultramarin, Eisen-Cyankomplexe bewährt.

Eine bevorzugte Zusammensetzung für eine Bleistiftmine umfasst:

| | |
|---|---|
| 15 bis 25 Gew.-% | Bindemittel |
| 4 bis 12 Gew.-% | Wachs |
| 0,5 bis 2 Gew.-% | Palmöl und |
| Rest | Graphit oder Graphit und Ruß |

Insbesondere weist eine Bleistiftmine auf:

| | |
|---|---|
| 15 bis 25 Gew.-% | Polystyrol (PS) |
| 4 bis 12 Gew.-% | Calziumstearat |
| 0,5 bis 2 Gew.-% | Palmöl und |
| Rest | Graphit oder Graphit und Ruß |

Eine beispielhaft genannte Rezeptur 1 für eine Bleistiftmine umfasst:

| | |
|---|---|
| Polystyrol (PS) | 21 Gew. % |
| Caliciumstearat | 6 Gew. % |
| Palmöl | 1,0 Gew. % |
| Graphit | Rest |

In der nachfolgenden **Tabelle** wird die Reduzierung des Extrusionsdrucks im Extruderkopf bei der Herstellung einer erfindungsgemäßen Bleistiftmine nach Rezeptur 1 gegenüber einer extrudierten Bleistiftmine nach dem Stand der Technik dargestellt.

| | Bleistiftmine Rezeptur 1 | Mine nach dem Stand der Technik |
|---|---|---|
| Druck im Extruderkopf (in bar) | < 200 | 350 - 450 |

Hierbei ist deutlich zu erkennen, dass Minen die entsprechend der erfinderischen Zusammensetzung ausgebildet sind, deutlich geringere Extrusionsdrücke für die Herstellung benötigen. Maschinen- und Werkzeugstandzeit werden verlängert und die Maschinenauslegung vereinfacht.

Eine beispielhafte Rezeptur 2 für eine Bleistiftmine umfasst:

| | |
|---|---|
| Styrol-Acylnitril (SAN) | 15 Gew. % |
| Aluminiumstearat | 10 Gew. % |
| Palmöl | 2 Gew. % |
| Graphit | Rest |

Eine bevorzugte Zusammensetzung für eine Farbstiftmine umfasst:

| | |
|---|---|
| 15 bis 25 Gew.-% | Bindemittel |
| 4 bis 12 Gew.-% | Wachs |
| 0,5 bis 2 Gew.-% | Palmöl und |
| Rest | Schichtsilikat(e) und/oder hexagonales Bornitrid sowie mindestens ein buntes Pigment und/oder ein unbuntes Pigment |

Insbesondere weist eine Farbstiftmine auf:

| | |
|---|---|
| 15 bis 25 Gew.-% | Polystyrol (PS) |
| 4 bis 12 Gew.-% | Montanwachse |
| 0,5 bis 2 Gew.-% | Palmöl und |
| Rest | Talkum und/oder hexagonales Bornitrid sowie mindestens ein buntes Pigment und/oder ein unbuntes Pigment |

Als Verfahren zur Herstellung einer erfindungsgemäßen polymergebundenen Mine hat sich eine Extrusion bewährt.

Die erfindungsgemäße Mine wird insbesondere unter Durchführung nachfolgend aufgeführter Schritte hergestellt:
- Mischen und Granulieren aller Rezepturkomponenten der Mine zu einem Minengranulat;
- Extrudieren den Minengranulates bei einer Temperatur im Bereich von 130 bis 200 °C auf einem Extruder durch ein geeignetes Mundstück zu endlosen Minensträngen;
- Kühlen und Verfestigen des endlosen Minenstrangs; und
- Schneiden des endlosen Minenstrangs auf Endlänge, insbesondere auf die benötigte Stiftlänge;

Je nach Extrusionskopf kann der Minenquerschnitt beliebige Formen annehmen - rund, eckig oder Kombinationen daraus. Des weiteren besteht die Möglichkeit über eine Mehrfach-Coextrusion verschiedene Minenrezepturen in einem Extrusionskopf zu einer mehrkomponentigen Mine zu verbinden.

## Patentansprüche

1. **Polymergebundene Mine** für Schreib-, Zeichen- oder Malgeräte, insbesondere für Bleistifte oder Farbstifte, umfassend mindestens ein polymeres Bindemittel, mindestens ein Wachs, mindestens einen Füllstoff und Palmöl aufweist,
**dadurch gekennzeichnet,**
**dass** die Mine
| | | |
|---|---|---|
| 10 bis 30 Gew.-% | | Bindemittel |
| 2 bis 25 Gew.-% | | Wachs |
| 0,1 bis 5 Gew.-% | | Palmöl und |
| Rest | Füllstoff(e) | |
aufweist.

2. **Mine** nach Anspruch 1,
**dadurch gekennzeichnet,**
**dass** die Mine
| | |
|---|---|
| 15 bis 25 Gew.-% | Bindemittel |
| 4 bis 20 Gew.-% | Wachs |
| 0,5 bis 2,5 Gew.-% | Palmöl und |
| Rest | Füllstoff(e) |
aufweist.

3. **Mine** nach Anspruch 1 oder 2,
**dadurch gekennzeichnet,**
**dass** das mindestens eine Bindemittel aus mindestens einem Polymer der Gruppe umfassend Polystyrol (PS), Styrol/Acrylnitril (SAN), Styrol/Butadien (SB), Polyolefine (PO) und Acrylnitril/Butadien/Styrol (ABS) gebildet ist.

4. **Mine** nach einem der Ansprüche 1 bis 3,
**dadurch gekennzeichnet,**
**dass** das mindestens eine Wachs aus mindestens einem Wachs der Gruppe umfassend Fettsäuren, Stearate, Montanwachse, Amidwachse, Paraffine gebildet ist.

5. **Mine** nach Anspruch 4,
**dadurch gekennzeichnet,**
**dass** das mindestens eine Wachs aus Kalziumstearat gebildet ist oder Kalziumstearat umfasst.

6. **Mine** nach einem der Ansprüche 1 bis 5,
**dadurch gekennzeichnet,**
**dass** der mindestens eine Füllstoff mindestens einen Füllstoff aus der Gruppe umfassend Graphit, Ruß, hexagonales Bornitrid, Schichtsilikate, Kreide, Schwerspat, bunte Pigmente und/oder unbunte Pigmente aufweist.

7. **Mine** nach einem der Ansprüche 1 bis 6,
**dadurch gekennzeichnet,**
**dass** die Mine eine Bleistiftmine ist und
| | |
|---|---|
| 15 bis 25 Gew.-% | Bindemittel |
| 4 bis 12 Gew.-% | Wachs |
| 0,5 bis 2 Gew.-% | Palmöl und |
| Rest | Graphit oder Graphit und Ruß aufweist. |

8. **Mine** nach Anspruch 7,
**dadurch gekennzeichnet,**
**dass** die Mine eine Bleistiftmine ist und
| | |
|---|---|
| 15 bis 25 Gew.-% | Polystyrol |
| 4 bis 12 Gew.-% | Kalziumstearat |
| 0,5 bis 2 Gew.-% | Palmöl und |
| Rest | Graphit oder Graphit und Ruß aufweist. |

9. **Mine** nach einem der Ansprüche 1 bis 6,
**dadurch gekennzeichnet,**
**dass** die Mine eine Farbstiftmine ist und
| | |
|---|---|
| 15 bis 25 Gew.-% | Bindemittel |
| 4 bis 12 Gew.-% | Wachs |
| 0,5 bis 2 Gew.-% | Palmöl und |
| Rest | Schichtsilikat(e) und/oder hexagonales Bornitrid sowie mindestens ein buntes Pigment und/oder ein unbuntes Pigment |
aufweist.

10. **Mine** nach Anspruch 9,
**dadurch gekennzeichnet,**
**dass** die Mine eine Farbstiftmine ist und
| | |
|---|---|
| 15 bis 25 Gew.-% | Polystyrol |
| 4 bis 12 Gew.-% | Montanwachs |
| 0,5 bis 2 Gew.-% | Palmöl und |
| Rest | Talkum und/oder hexagonales Bornitrid sowie mindestens ein buntes Pigment und/oder ein unbuntes Pigment |
aufweist.

11. V**erfahren zur Herstellung** einer polymergebundenen Mine nach einem der Ansprüche 1 bis 10,
**dadurch gekennzeichnet,**
**dass** die Mine durch Extrusion gebildet wird.

## Claims

1. Polymer-bound refill for writing, drawing or marking implements, particularly for pencils or crayons, comprising at least one polymer binder, at least one wax, at least one filler and palm oil, **characterised in that** the refill comprises
| | |
|---|---|
| 10 to 30 weight % | binder |
| 2 to 25 weight % | wax |
| 0.1 to 5 weight % | palm oil and |
| remainder | filler(s) |

2. Refill according to claim 1, **characterised in that** the refill comprises
| | |
|---|---|
| 15 to 25 weight % | binder |
| 4 to 20 weight % | wax |
| 0.5 to 2.5 weight % | palm oil and |
| remainder | filler(s) |

3. Refill according to claim 1 or claim 2, **characterised in that** the at least one binder is formed from at least one polymer of the group comprising polystyrol (PS), styrol/acrylnitrile (SAN), styrol/butadiene (SB), polyolefines (PO) and acrylnitrile/butadiene/styrol (ABS).

4. Refill according to any one of claims 1 to 3, **characterised in that** the at least one wax is formed from at least one wax of the group comprising fatty acids, stearates, montan-waxes, amide-waxes and paraffins.

5. Refill according to claim 4, **characterised in that** the at least one wax is formed from calcium stearate or comprises calcium stearate.

6. Refill according to any one of claims 1 to 5, **characterised in that** the at least one filler comprises at least one filler from the group comprising graphite, carbon black, hexagonal boron nitride, layered silicates, chalk, barite, chromatic pigments and/or achromatic pigments.

7. Refill according to any one of claims 1 to 6, **characterised in that** the refill is a pencil refill and comprises
| | |
|---|---|
| 15 to 25 weight % | binder |
| 4 to 12 weight % | wax |
| 0.5 to 2 weight % | palm oil and |
| remainder | graphite or graphite and carbon black. |

8. Refill according to claim 7, **characterised in that** the refill is a pencil refill and comprises
| | |
|---|---|
| 15 to 25 weight % | polystyrol |
| 4 to 12 weight % | calcium stearate |
| 0.5 to 2 weight % | palm oil and |
| remainder | graphite or graphite and carbon black. |

9. Refill according to any one of claims 1 to 6, **characterised in that** the refill is a crayon refill and comprises
| | |
|---|---|
| 15 to 25 weight % | binder |
| 4 to 12 weight % | wax |
| 0.5 to 2 weight % | palm oil and |
| remainder | layered silicate(s) and/or hexagonal boron nitride as well as at least one chromatic pigment and/or achromatic pigment. |

10. Refill according to claim 9, **characterised in that** the refill is a crayon refill and comprises
| | |
|---|---|
| 15 to 25 weight % | polystyrol |
| 4 to 12 weight % | montan wax |
| 0.5 to 2 weight % | palm oil and |
| remainder | talcum and/or hexagonal boron nitride as well as at least one chromatic pigment and/or achromatic pigment. |

11. Method of producing a polymer-bound refill according to any one of claims 1 to 10, **characterised in that** the refill is formed by extrusion.

## Revendications

1. Mine liée par un polymère pour appareils d'écriture, de dessin ou de peinture, en particulier pour crayons à papier ou crayons de couleur, comportant au moins un liant polymère, au moins une cire, au moins une matière de charge et de l'huile de palme,
**caractérisée en ce que** la mine comprend
| | |
|---|---|
| 10 à 30 % en poids | de liant |
| 2 à 25 % en poids | de cire |
| 0,1 à 5 % en poids | d'huile de palme, et |
| le reste | de matière(s) de charge. |

2. Mine selon la revendication 1,
**caractérisée en ce que** la mine comprend
| | |
|---|---|
| 15 à 25 % en poids | de liant |
| 4 à 20 % en poids | de cire |
| 0,5 à 2,5 % en poids | d'huile de palme, et |
| le reste | de matière(s) de charge. |

3. Mine selon la revendication 1 ou 2,
**caractérisée en ce qu'**au moins un liant est formé à partir d'au moins un polymère du groupe comprenant le polystyrène (PS), le styrène/acrylonitrile (SAN), le styrène/butadiène (SB), la polyoléfine (PO) et l'acrylonitrile/butadiène/styrène (ABS).

4. Mine selon l'une des revendications 1 à 3,
**caractérisée en ce que** la cire, au moins au nombre de une, est formée à partir d'au moins une cire du groupe comprenant des acides gras, des stéarates, des cires de lignite, des cires d'amide, des paraffines.

5. Mine selon la revendication 4 ,
**caractérisée en ce que** la cire, au moins au nombre de une, est formée à partir de stéarate de calcium ou comporte du stéarate de calcium.

6. Mine selon l'une des revendications 1 à 5,
**caractérisée en ce que** la matière de charge, au moins au nombre de une, présente au moins une matière de charge sélectionnée dans le groupe comprenant du graphite, du noir de carbone, du nitrure de bore hexagonal, des silicates stratifiés, la craie, de la barytine, des pigments de couleur et/ou des pigments achromatiques.

7. Mine selon l'une des revendications 1 à 6,
**caractérisée en ce que** la mine est une mine de crayon à papier et présente
| | |
|---|---|
| 15 à 25 % en poids | de liant |
| 4 à 12 % en poids | de cire |
| 0,5 à 2 % en poids | d'huile de palme, et |
| le reste | de graphite ou de graphite et de noir de carbone. |

8. Mine selon la revendication 7,
**caractérisée en ce que** la mine est une mine de crayon à papier et présente
| | |
|---|---|
| 15 à 25 % en poids | de polystyrène |
| 4 à 12 % en poids | de stéarate de calcium |
| 0,5 à 2 % en poids | d'huile de palme, et |
| le reste | de graphite ou de graphite et de noir de carbone. |

9. Mine selon l'une des revendications 1 à 6,
**caractérisée en ce que** la mine est une mine de crayon de couleur et présente
| | |
|---|---|
| 15 à 25 % en poids | de liant |
| 4 à 12 % en poids | de cire |
| 0,5 à 2 % en poids | d'huile de palme, et |
| le reste | de silicate(s) stratifié(s) et/ou de nitrure de bore hexagonal, ainsi qu'au moins un pigment de couleur et/ou un pigment achromatique. |

10. Mine selon la revendication 9,
**caractérisée en ce que** la mine est une mine de crayon de couleur et présente
| | |
|---|---|
| 15 à 25 % en poids | de polystyrène |
| 4 à 12 % en poids | de cire de lignite |
| 0,5 à 2 % en poids | d'huile de palme, et |
| le reste | de talc et/ou de nitrure de bore hexagonal, ainsi qu'au moins un pigment de couleur et/ou un pigment achromatique. |

11. Procédé de fabrication d'une mine liée par un polymère selon l'une des revendications 1 à 10,
**caractérisé en ce que** la mine est formée par extrusion.
